# FASCICULE DE BREVET EUROPEEN

(11) **EP 0 836 691 B1**
(45) Date de publication et mention de la délivrance du brevet: **17.11.1999**
(21) Numéro de dépôt: 96924917.6
(22) Date de dépôt: 02.07.1996
(51) Int. Cl.: F16K 47/08

(54) **DISPOSITIF DE COMMANDE DE DEBIT**
DURCHFLUSSREGELVORRICHTUNG
FLOW CONTROL DEVICE

(30) Priorité: 05.07.1995 FR 9508105
(43) Date de publication de la demande: 22.04.1998
(73) Titulaire: S.E.R.A.C. GROUP, 72400 La Ferte-Bernard (FR)
(72) Inventeur: BRUNEE, Jacky, F-72400 Avèze (FR)
(74) Mandataire: Fruchard, Guy
(86) Numéro de dépôt international: FR9601025
(87) Numéro de publication internationale: WO9702449

(56) Documents cités:
- CH-A- 400 700
- DE-A- 3 302 050
- FR-A- 991 740
- FR-A- 1 554 857
- US-A- 3 791 618

## Description

La présente invention concerne un dispositif de commande de débit.

On connaît des dispositifs de commande de débit, qu'il s'agisse de dispositifs destinés à une régulation du débit en un point intermédiaire d'une conduite d'alimentation ou de dispositifs destinés à établir ou interrompre un écoulement à l'extrémité d'un bec de remplissage, comportant deux organes, un organe d'obturation et une paroi, montés pour coulisser l'un par rapport à l'autre et ayant une section décroissante vers un orifice d'écoulement. Dans les dispositifs connus l'organe d'obturation et la paroi ont généralement une section circulaire dont le diamètre décroît vers l'orifice d'écoulement, la dimension et la forme de l'organe d'obturation étant adaptées pour permettre un appui de l'organe d'obturation sur la paroi pour une position fermée du dispositif de commande de débit. La section de passage est alors une section annulaire et le débit est régulé par la variation de la largeur de cette section annulaire. En particulier lorsque l'on souhaite que le débit soit faible, on prévoit généralement de disposer l'organe d'obturation par rapport à la paroi pour obtenir une faible largeur du passage annulaire, cette largeur étant uniforme sur le pourtour de l'organe d'obturation. Lorsque le produit à conditionner est un liquide contenant des particules solides telles que des pulpes dans le cas d'un jus de fruit, la réduction de la largeur de passage en-dessous de la section des pulpes entraîne une accumulation des pulpes en amont de l'organe d'obturation et provoque des perturbations dans l'écoulement du liquide. En outre, les pulpes accumulées constituent un tampon empêchant une fermeture étanche de l'organe d'obturation, ce qui provoque une souillure des conditionnements qui sont déplacés sous un bec de remplissage ainsi qu'une souillure de l'installation en-dessous des becs de remplissage.

On connaît également des documents CH-A-400 700 et DE 30 02050 un dispositif de commande du débit du type précité dans lequel la paroi comporte une partie ayant une face interne cylindrique adjacente à l'orifice d'écoulement et des gorges s'étendant dans la paroi en regard de l'organe d'obturation afin de réaliser une variation non linéaire du débit lors du déplacement de l'organe d'obturation. Toutefois ces dispositifs concernent des applications très différentes de celle de l'invention. En particulier, la forme de l'organe d'obturation des documents cités n'est pas adaptée à des liquides contenant des pulpes ou des morceaux de sorte que les dispositifs connus seraient inexploitables dans le domaine des liquides contenant des particules solides.

Selon l'invention on prévoit un dispositif de commande dans lequel l'organe d'obturation est un disque. Ainsi, lors d'une utilisation en relation avec un liquide contenant des pulpes ou des morceaux l'organe d'obturation assure une restriction localisée favorisant un passage des particules solides même à faible débit. En outre, l'effort de déplacement de l'organe d'obturation est minimisé et l'organe d'obturation assure un sectionnement des pulpes ou des morceaux lors de la fermeture et une remontée des particules solides lors de l'ouverture de sorte que l'on évite la formation d'un tampon en regard de l'organe d'obturation.

De préférence les gorges sont limitées à la partie supérieure de la partie ayant une face interne cylindrique. Ainsi en déplaçant le clapet vers le bas de la face cylindrique on obtient une fermeture totale du dispositif de commande de débit.

D'autres caractéristiques et avantages de l'invention apparaîtront encore à la lecture de la description qui suit d'un mode de réalisation particulier non limitatif de l'invention, en référence aux figures ci-jointes parmi lesquelles:
- la figure 1 est une vue de dessus d'un dispositif de régulation de débit selon l'invention,
- la figure 2 est une vue en coupe selon la ligne II-II de la figure 1, la moitié de gauche étant représentée en position fermée de l'organe d'obturation tandis que la moitié droite est représentée en position partiellement ouverte,
- la figure 3 est une vue analogue à celle de la figure 2 d'une variante de réalisation de l'invention.

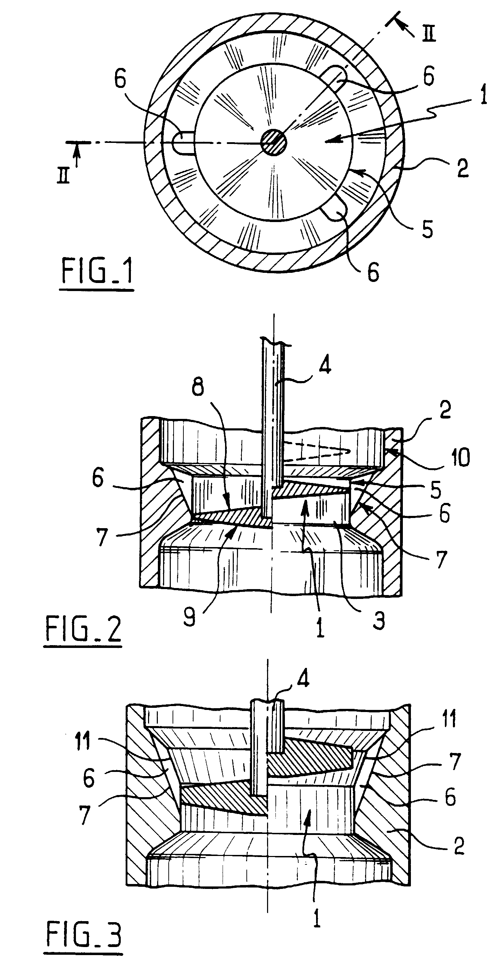

En référence aux figures 1 et 2, le dispositif de commande de débit selon l'invention comporte de façon connue en soi deux organes, un organe d'obturation et une paroi, l'organe d'obturation généralement désigné en 1 étant monté pour se déplacer en regard d'une paroi 2 ayant une section décroissante vers un orifice d'écoulement 3. Dans le mode de réalisation illustré, l'organe d'obturation 1 est un organe de régulation de débit associé à une tige de manoeuvre 4.

Selon le mode de réalisation préféré illustré, la paroi 2 comporte une partie ayant une face interne cylindrique 5 dont le bord inférieur délimite l'orifice d'écoulement 3. Trois gorges 6 sont réalisées à 120° les unes des autres autour de l'axe longitudinal du dispositif de commande de débit. Les gorges 6 sont réalisées dans la portion supérieure de la partie ayant une face interne cylindrique 5 et débouchent latéralement dans la face cylindrique. Le fond 7 des gorges 6 est incliné par rapport à l'axe longitudinal du dispositif de commande de débit de sorte que la section des gorges 6 est décroissante vers l'orifice d'écoulement 3.

Dans le mode de réalisation illustré, les gorges 6 sont verticales et ne s'étendent pas tout à fait jusqu'à l'orifice d'écoulement 3 qui a une section circulaire.

L'organe d'obturation 1 est formé par un disque métallique mince ayant un diamètre égal à celui de l'orifice d'écoulement 3 et dont le bord est formé par l'intersection d'une face supérieure conique 8 convexe, c'est à dire dont le sommet est dirigé vers le haut, et d'une face inférieure conique 9 convexe, c'est à dire dont le sommet est dirigé vers le bas.

Lorsque l'organe d'obturation est disposé en regard de l'orifice d'écoulement 3 comme illustré sur la partie gauche de la figure 2, le bord de l'organe d'obturation assure une étanchéité sur tout le pourtour de l'orifice d'écoulement 3 de sorte que le dispositif de commande de débit est fermé de façon étanche. Lorsque l'organe d'obturation 1 est déplacé dans une position d'ouverture partielle comme représenté en trait continu sur la partie de droite de la figure 2, l'organe d'obturation 1 continue à assurer une étanchéité sur la majeure partie de la face cylindrique 5 de la paroi 2 et le débit de liquide est réglé par la section des gorges 6 en regard du bord de l'organe d'obturation 1. On remarquera que tout en ayant une section de passage total faible permettant d'obtenir un faible débit, la section ponctuelle au niveau de chacune des gorges est suffisante pour laisser passer des pulpes dans le cas de conditionnement d'un jus de fruit de sorte que tout en assurant un faible débit on évite une accumulation de pulpe en amont de l'organe d'obturation 1.

Lorsque l'organe d'obturation 1 est déplacé vers une position au-dessus de la portion cylindrique 5 comme représenté en pointillés sur la partie de droite de la figure 2, le bord de l'organe d'obturation est en regard d'une partie 10 de la paroi 2 ayant une section supérieure à celle de la face cylindrique 5, ce qui permet un écoulement à un débit élevé. L'organe d'obturation 1 est de préférence mis dans cette position lors du nettoyage afin de permettre un balayage de l'ensemble des surfaces internes du dispositif de commande de débit par le produit de nettoyage.

Lors de la fermeture de l'organe d'obturation, le bord de l'organe d'obturation 1 assure en outre un cisaillement des pulpes qui pourraient se trouver à cheval sur l'extrémité inférieure des gorges 6 au moment de la fermeture.

Les surfaces coniques 8 et 9 permettent d'obtenir un organe d'obturation 1 ayant un bord cylindrique mince tout en ayant une bonne rigidité de sorte que l'on obtient ainsi une régulation précise de l'écoulement. En outre cette structure en minimise le frottement de l'organe d'obturation contre la partie cylindrique 5 de la paroi 2. Par ailleurs, la face inférieure conique 9 permet une remontée des bulles d'air lors de l'écoulement du liquide et la face conique convexe 8 évite une stagnation de produit de nettoyage sur la face supérieure du clapet 1 lors de la phase de nettoyage.

La figure 3 illustre une variante de réalisation dans laquelle la partie de paroi en regard de l'organe d'obturation 1 comporte une partie conique 11 en amont de la partie cylindrique 5, les gorges 6 s'étendant non seulement dans la partie supérieure de la partie cylindrique 5 mais également dans la partie conique 11. Une telle disposition permet de faire varier le débit de façon très régulière tout en assurant pour chaque position de l'organe d'obturation 1 une section de passage ponctuellement suffisante pour permettre un passage des pulpes même dans les positions de l'organe d'obturation où l'espace entre le bord de l'organe d'obturation et la paroi 11 ne serait pas suffisant pour laisser passer les pulpes.

Bien entendu l'invention n'est pas limitée au mode de réalisation décrit et on peut y apporter des variantes de réalisation sans sortir du cadre de l'invention tel que défini par les revendications.

En particulier, bien que l'invention ait été décrite en relation avec un dispositif de régulation de débit disposé dans une partie intermédiaire d'une conduite d'alimentation et comportant un organe de régulation de débit, le dispositif selon l'invention peut être disposé à l'extrémité terminale d'un bec de remplissage, l'organe d'obturation étant alors un clapet associé à un siège. Dans le cas d'un dispositif de régulation de débit pour lequel la variation de débit doit être effectuée entre une valeur minimale et une valeur maximale sans assurer la fermeture totale du passage, les gorges 6 peuvent s'étendre jusqu'à l'orifice d'écoulement, la section des gorges 6 au niveau de l'orifice d'écoulement ayant une valeur appropriée pour permettre l'écoulement à la valeur minimale.

Bien que le fond 7 des gorges 6 ait été illustré avec une forme rectiligne, on peut également prévoir des gorges 6 ayant un fond incurvé pour réaliser une variation plus rapide de la section de passage.

Bien que dans le mode de réalisation illustré l'organe d'obturation soit manoeuvré par une tige de commande on peut bien entendu réaliser l'invention en relation avec un clapet manoeuvré par un dispositif magnétique.

Le nombre de gorges peut être adapté au produit à conditionner, en particulier pour un débit faible avec un produit très chargé on prévoira de préférence une seule gorge ayant une section correspondant au débit requis tandis que dans le cas de charges de faible dimension on pourra prévoir un plus grand nombre de gorges de petites dimensions pour mieux répartir l'écoulement.

Dans le cas d'une partie de paroi cylindrique dans laquelle sont réalisées des gorges, celles-ci pourraient s'étendre dans la portion inférieure de la partie cylindrique, le débit étant alors décroissant lors d'une remontée de l'organe d'obturation.

## Revendications

1. Dispositif de commande de débit comportant une paroi (2) comprenant une partie ayant une face interne cylindrique (5) adjacente à un orifice d'écoulement (3), des gorges (6) réalisées dans la partie ayant une face interne cylindrique (5), et un organe d'obturation monté pour coulisser en regard de la paroi, le déplacement de l'organe d'obturation en regard des gorges réalisant une variation de débit, caractérisé en ce que l'organe d'obturation (1) est formé par un disque (9).

2. Dispositif de commande de débit selon la revendication 1, caractérisé en ce que les gorges (6) sont limitées à une portion de la partie cylindrique.

3. Dispositif de commande de débit selon la revendication 1, caractérisé en ce qu'en amont de la partie de paroi ayant une face interne cylindrique (5), la paroi (2) comporte une partie de paroi (10) ayant une section supérieure à celle de la partie ayant une face interne cylindrique (5).

4. Dispositif de commande de débit selon la revendication 1, caractérisé en ce que l'organe d'obturation (1) a une face supérieure (8) conique convexe.

5. Dispositif de commande de débit selon la revendication 1, caractérisé en ce que l'organe d'obturation (1) a une face inférieure (9) conique convexe.

## Patentansprüche

1. Durchflußregelvorrichtung, umfassend eine Wand (2), mit einem Abschnitt, der eine an eine Austrittsöffnung (3) angrenzende zylindrische Innenfläche (5) hat, Rillen (6), die in dem die zylindrische Innenfläche (5) aufweisenden Abschnitt ausgebildet sind, und ein Verschlußelement, das gegenüber der Wand verschiebbar gelagert ist, wobei die Verstellung des Verschlußelementes gegenüber den Rillen eine Änderung der Durchflußmenge bewirkt, dadurch **gekennzeichnet,** daß das Verschlußelement (1) von einer Scheibe (9) gebildet ist.

2. Durchflußregelvorrichtung nach Anspruch 1, dadurch **gekennzeichnet,** daß die Rillen (6) durch einen Teil des zylindrischen Abschnittes begrenzt sind.

3. Durchflußregelvorrichtung nach Anspruch 1, dadurch **gekennzeichnet,** daß die Wand (2) stromaufwärts des eine zylindrische Innenfläche (5) aufweisenden Wandabschnittes einen Wandabschnitt (10) hat, dessen Querschnitt größer als der Querschnitt des die zylindrische Innenfläche (5) aufweisenden Wandabschnittes ist.

4. Durchflußregelvorrichtung nach Anspruch 1, dadurch **gekennzeichnet,** daß das Verschlußelement (1) eine konvexe konische Oberseite (8) hat.

5. Durchflußregelvorrichtung nach Anspruch 1, dadurch **gekennzeichnet,** daß das Verschlußelement (1) eine konvexe konische Unterseite (9) hat.

## Claims

1. A flow rate control device including a wall (2) having a portion with a cylindrical inside face (5) adjacent to a flow orifice (3), grooves (6) formed in the portion having a cylindrical inside face (5), and a shutter member mounted to slide facing the wall, the movement of the shutter member in front of the grooves producing a variation of flow, the device being characterized in that the shutter member (1) is formed by a disk (9).

2. A flow rate control device according to claim 1, characterized in that the grooves (6) are restricted to a part of the cylindrical portion.

3. A flow rate control device according to claim 1, characterized in that upstream from the wall portion having a cylindrical inside face (5), the wall (2) includes a wall portion (10) having a section that is greater than that of the portion having a cylindrical inside face (5).

4. A flow rate control device according to claim 1, characterized in that the shutter member (1) has a top face (8) that is conical and convex.

5. A flow rate control device according to claim 1, characterized in that the shutter member (1) has a bottom face (9) that is conical and convex.
